# EUROPEAN PATENT SPECIFICATION

(11) **EP 2 808 371 B1**
(45) Date of publication and mention of the grant of the patent: **18.09.2019**
(21) Application number: 13169500.9
(22) Date of filing: 28.05.2013
(51) Int. Cl.: C09J 11/00

(54) **Degassing Additive for Pressure sensitive Adhesives**
Additiv für die Entgasung druckempfindlicher Klebstoffe
Additif de dégazage pour adhésifs sensibles à la pression

(43) Date of publication of application: 03.12.2014
(73) Proprietor: 3M Innovative Properties Company, Saint Paul, MN 55133-3427 (US)
(72) Inventor: Buettner, Joern, 41453 Neuss (DE); Dietrich, Stefan, 41453 Neuss (DE); Kuesters, Christoph, 41453 Neuss (DE)
(74) Representative: Gabriel, Kiroubagaranne

(56) References cited:
- JP-A- 2007 138 095
- JP-A- 2008 050 507
- JP-A- 2012 077 306
- US-A1- 2010 206 761
- CZECH ET AL: "Development of solvent-free acrylic pressure-sensitive adhesives", EUROPEAN POLYMER JOURNAL, PERGAMON PRESS LTD. OXFORD, GB, vol. 43, no. 8, 4 August 2007 (2007-08-04) , pages 3604-3612, XP022183210, ISSN: 0014-3057, DOI: 10.1016/J.EURPOLYMJ.2007.05.003

## Description

### Technical Field

The present disclosure relates generally to the field of adhesives, more specifically to the field of pressure sensitive adhesives which contain relatively low levels of volatile organic compounds. The present disclosure is also directed to a method of preparing pressure sensitive adhesives having low levels of volatile organic compounds.

### Background

Adhesives have been used for a variety of marking, holding, protecting, sealing and masking purposes. Adhesive tapes generally comprise a backing, or substrate, and an adhesive. One type of adhesive, a pressure sensitive adhesive, is particularly preferred for many applications. Pressure sensitive adhesives (PSAs) are well known to one of ordinary skill in the art to possess certain properties including the following: (1) aggressive and permanent tack, (2) adherence with no more than finger pressure, (3) sufficient ability to hold onto an adherend, and (4) sufficient cohesive strength.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are various (meth)acrylate (e.g., acrylate and methacrylate) based copolymers, natural rubber, synthetic rubbers (e.g., styrene/butadiene copolymers (SBR) and styrene/isoprene/styrene (SIS) block copolymers), and silicones.

Many PSA tapes derive from solvent based processes and in addition many polymerization processes have non-complete conversion, leaving a significant amount of residual monomers or solvent residues in the adhesive product. Together with impurities of the raw materials, all these aspects contribute to a sum of low molecular weight substances that are volatile.

Due to environmental and health concerns, the so-called Volatile Organic Compounds (VOC) are more and more in focus, and in many fields of applications the amount of VOC is increasingly regulated. VOC are indeed the source of the specific "odour" of adhesive tapes and are believed to be the source of the so-called "sick house syndrome". The removal of volatile organic compounds in adhesive tapes has therefore become an increasing challenge. The industrial and automotive market, in particular, is requesting strict VOC levels for car interior applications or indoor construction applications.

Several efforts have been made to reduce the amount of volatile organic compounds by eliminating solvents from the manufacturing processes, increasing the polymerization conversion rate or by substituting reactants so as to produce less volatile components.

The use of vacuum treatment for the purpose of removing low boiling solvents from adhesives made from solvent based polymerization is described e.g. in US 2007/0138296 (Bargmann et al.), EP-A1-1484342 (Husemann et al.) or EP-A1-1479746 (Husemann et al.).

US 2010/0206761 (Bubat et al.) discloses a storage tank charged with an aqueous fluid and composed of porous, free-flowing hydrophobic particles, where the particles are composed of a hydrophobic polymer. JP 2012-77306 (Sekisui Chemical) and JP 2007-138095 (Sekisui Chemical) describe adhesive sheets comprising a sheet-shaped object of a resin comprising a thermosetting resin component and a hydrophobically treated inorganic porous carrier. "Development of solvent-free acrylic pressure-sensitive adhesives" (Czech et al.), European Polymer Journal 43 (2007), 3604-3612, discloses a solvent-free pressure-sensitive adhesive based on a pre-polymerized acrylic precursor composition. JP 2008-050507 (Nippon Carbide Kogyo) discloses an acrylic pressure-sensitive adhesive comprising porous silica.

Without contesting the technical advantages associated with the solutions disclosed in the art, there is still a need for pressure sensitive adhesives which contain relatively low levels of volatile organic compounds and for convenient methods of manufacturing pressure sensitive adhesives having low levels of volatile organic compounds.

Other advantages of the pressure sensitive adhesives, precursor compositions of pressure sensitive adhesive and methods of the disclosure will be apparent from the following description.

### Summary

According to one aspect, the present disclosure relates to a process of manufacturing a pressure sensitive adhesive, the process comprising the steps of:
a) providing a precursor composition of a pressure sensitive adhesive;
b) incorporating a degassing additive into the precursor composition of a pressure sensitive adhesive, wherein the degassing additive comprises a porous carrier and an aqueous medium, wherein the porous carrier comprises a polymeric material and wherein the aqueous medium is absorbed into the porous carrier and comprises a surfactant;
c) allowing the degassing additive to release the aqueous medium into the precursor composition of a pressure sensitive adhesive; and
d) extracting the water released from the degassing additive, from the precursor of a pressure sensitive adhesive.

According to another aspect, the present disclosure relates to a precursor composition of a pressure sensitive adhesive comprising a degassing additive, wherein the degassing additive comprises a porous carrier and an aqueous medium, wherein the porous carrier comprises a polymeric material and wherein the aqueous medium is absorbed into the porous carrier and comprises a surfactant.

In still another aspect, the present disclosure relates to the use of a degassing additive comprising a porous carrier and an aqueous medium, wherein the porous carrier comprises a polymeric material and wherein the aqueous medium is absorbed into the porous carrier and comprises a surfactant, for reducing volatile organic compounds in a pressure sensitive adhesive.

### Detailed description

The present disclosure provides pressure sensitive adhesives which contain relatively low levels of volatile organic compounds, whilst ensuring excellent adhesion performance.

In a first aspect, the present disclosure relates to a process of manufacturing a pressure sensitive adhesive, the process comprising the steps of:
a) providing a precursor composition of a pressure sensitive adhesive;
b) incorporating a degassing additive into the precursor composition of a pressure sensitive adhesive, wherein the degassing additive comprises a porous carrier and an aqueous medium, wherein the porous carrier comprises a polymeric material and wherein the aqueous medium is absorbed into the porous carrier and comprises a surfactant;
c) allowing the degassing additive to release the aqueous medium into the precursor composition of a pressure sensitive adhesive; and
d) extracting the water released from the degassing additive, from the precursor composition of a pressure sensitive adhesive.

In the context of the present disclosure, the term "adhesive" as used herein refers to polymeric compositions useful to adhere together two adherends. Examples of adhesives are pressure sensitive adhesives. Pressure sensitive adhesive compositions are well known to those of ordinary skill in the art to possess properties including the following: (1) aggressive and permanent tack, (2) adherence with no more than finger pressure, (3) sufficient ability to hold onto an adherend, and (4) sufficient cohesive strength. Materials that have been found to function well as pressure sensitive adhesives are polymers designed and formulated to exhibit the requisite viscoelastic properties resulting in a desired balance of tack, peel adhesion, and shear holding power.

In the context of the present disclosure, the expression "precursor composition of a pressure sensitive adhesive" as used herein is meant to refer to any base material which after one or several processing steps provides a pressure sensitive adhesive.

As will be apparent to those skilled in the art, the term "degassing additive", used throughout the description, refers to an additive enabling the azeotropic distillation of one component of a liquid mixture.

In the context of the present disclosure, the term "acrylate" refers to monomeric acrylic or methacrylic esters of alcohols. Acrylate and methacrylate monomers, oligomers, or polymers are referred to collectively herein as "acrylates". Throughout the following disclosure, the terms "acrylic" and "acrylate" may be used interchangeably.

The term "alkyl" refers to a monovalent group that is a radical of an alkane, which is a saturated hydrocarbon. The alkyl can be linear, branched, cyclic, or combinations thereof and typically has 1 to 32 carbon atoms. In some aspects, the alkyl group contains 1 to 20, 1 to 18, 1 to 12, 1 to 10, 1 to 8, 1 to 6, or 1 to 4 carbon atoms. In some other aspects, the alkyl group contains 12 to 32, 12 to 20, 12 to 18 or 12 to 16 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl and 2-propylheptyl.

The term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl.

The terms "glass transition temperature" and "Tg" are used interchangeably and refer to the glass transition temperature of a material or a mixture. Unless otherwise indicated, glass transition temperature values are determined by Differential Scanning Calorimetry (DSC).

In a preferred aspect, the precursor composition of a pressure sensitive adhesive for use herein, comprises a polymeric material, preferably a (meth)acrylate-based polymeric material. Suitable (meth)acrylate-based polymeric material for use herein will be easily identified by those skilled in the art, in the light of the present description. However, the present disclosure is not that limited as the precursor composition of a pressure sensitive adhesive for use herein may comprise any polymeric material commonly used for the preparation of pressure sensitive adhesives. Typical polymeric materials for use in the preparation of pressure sensitive adhesives include, but are not limited to, natural rubber, synthetic rubbers such as e.g., styrene/butadiene copolymers (SBR) and styrene/isoprene/styrene (SIS) block copolymers, silicones, and any combinations or mixtures thereof.

According to the preferred aspect according to which the precursor composition of a pressure sensitive adhesive comprises a (meth)acrylate-based polymeric material, the (meth)acrylate-based polymeric material for use in the present disclosure, is typically prepared from a polymerizable mixture comprising at least one linear or branched alkyl (meth)acrylate monomer, wherein the linear or branched alkyl group of the alkyl (meth)acrylate monomer typically comprises from 1 to 32, from 1 to 24, from 4 to 20, from 6 to 15, or even from 6 to 10 carbon atoms.

In some other aspects, the (meth)acrylate-based polymeric material for use in the present disclosure, is typically prepared from a polymerizable mixture comprising at least one linear or branched alkyl (meth)acrylate monomer, wherein the linear or branched alkyl group of the alkyl (meth)acrylate monomer typically comprises from 12 to 32, from 12 to 24, from 12 to 20, from 12 to 18 or even from 12 to 16 carbon atoms.

In a preferred aspect, the linear or branched alkyl (meth)acrylate monomer is selected from the group consisting of methyl acrylate, ethyl acrylate, n-propyl acrylate, isopropyl acrylate, n-butyl acrylate, isobutyl acrylate, n-pentyl acrylate, iso-pentyl acrylate, n-hexyl acrylate, iso-hexyl acrylate, cyclohexyl acrylate, octyl acrylate, iso-octyl acrylate, 2-ethylhexyl acrylate, decyl acrylate, lauryl acrylate, 2-propylheptyl acrylate, stearyl acrylate, isobornyl acrylate, octadecyl acrylate, nonyl acrylate, dodecyl acrylate, and any combinations or mixtures thereof. Also useful are aromatic acrylates, or acrylates containing aryl groups, e.g., benzyl acrylate.

More preferably, the alkyl (meth)acrylate monomer for use herein is selected from the group consisting of iso-octyl acrylate, 2-ethylhexyl acrylate, butyl acrylate, and any combinations or mixtures thereof. Still more preferably, the alkyl (meth)acrylate monomer for use herein comprises (or consists of) iso-octyl acrylate or 2-ethylhexyl acrylate.

Typically, the (meth)acrylate-based polymeric material for use in the present disclosure is prepared from a monomer mixture comprising from 50 to 100 parts, from 70 to 100 parts, from 80 to 100 parts, or even from 90 to 100 parts by weight of at least one linear or branched alkyl (meth)acrylate monomer, wherein the linear or branched alkyl group of the alkyl (meth)acrylate monomer preferably comprises from 1 to 24, from 4 to 20, from 6 to 15, or even from 6 to 10 carbon atoms.

Optionally, one or more mono-ethylenically unsaturated co-monomers may be present in the (pre-polymerization) monomer mixture used to prepare the (meth)acrylate-based polymeric material, in an amount of from 0.5 to 50 parts co-monomer, and are thus typically polymerized with the acrylate monomers. One class of useful co-monomers includes those having a homopolymer glass transition temperature greater than the glass transition temperature of the acrylate homopolymer. Sometimes these monomers are referred to as "reinforcing co-monomers". Typically these monomers have a homopolymer glass transition temperature greater than 20°C. Examples of suitable co-monomers falling within this class include acrylic acid, itaconic acid, methacrylic acid, acrylonitrile, methacrylonitrile, vinyl acetate, isobornyl acrylate, cyano ethyl acrylate, maleic anhydride, hydroxyalkylacrylates, beta-carboxyethyl acrylate, vinyl esters of neodecanoic, neononanoic, neopentanoic, 2-ethylhexanoic, or propionic acids (e.g., available from Union Carbide Corp. of Danbury, Conn. under the designation "Vynates"), vinylidene chloride, styrene, vinyl toluene, alkyl vinyl ethers, and any combinations or mixtures thereof. Preferred co-monomer for use herein includes, but is not limited to, acrylic acid. When present, the monoethylenically unsaturated co-monomer is typically used in amounts ranging from 0.5 to 25, from 1.0 to 15, from 1.0 to 8.0, from 2.0 to 6.0, or even from 3.0 to 5.0 parts, by weight per 100 parts by weight of (meth)acrylate-based polymeric material.

A second class of useful co-monomers includes those having a homopolymer glass transition temperature less than the glass transition temperature of the acrylate homopolymer. Examples of suitable co-monomers falling within this class include ethoxyethoxy ethyl acrylate (Tg=-71° C.) and methoxypolyethylene glycol 400 acrylate (Tg=-65° C.; available from Shin Nakamura Chemical Co., Ltd. under the designation "NK Ester AM-90G").

Accordingly, in some preferred aspects of the pressure sensitive adhesive precursor of the disclosure, the (meth)acrylate-based polymeric material (or the pre-polymerization monomer mixture used to prepare the (meth)acrylate-based polymeric material) comprises a co-polymer of at least one (meth)acrylate monomer, preferably an alkyl (meth)acrylate monomer.

In a preferred aspect, the (meth)acrylate-based polymeric material comprises a co-polymer of iso-octyl acrylate, 2-ethylhexyl acrylate, or butyl acrylate and acrylic acid.

In some other preferred aspects, the (meth)acrylate-based polymeric material (or the pre-polymerization monomer mixture used to prepare the (meth)acrylate-based polymeric material) further comprises a photocrosslinker, preferably a co-polymerized type (II) photocrosslinker, as defined hereinbelow.

Additionally, one or more multifunctional ethylenically unsaturated monomers may be included in the pre-polymerization monomer mixture used to prepare the (meth)acrylate-based polymeric material, typically in low concentration. Examples of such multifunctional ethylenically unsaturated monomers include, for example, multifunctional (meth)acrylate monomers. Multifunctional (meth)acrylates include tri(meth)acrylates and di(meth)acrylates (that is, compounds comprising three or two (meth)acrylate groups). Typically di(meth)acrylate monomers (that is, compounds comprising two (meth)acrylate groups) are used. Useful tri(meth)acrylates include, for example, trimethylolpropane tri(meth)acrylate, propoxylated trimethylolpropane triacrylates, ethoxylated trimethylolpropane triacrylates, tris(2-hydroxy ethyl)isocyanurate triacrylate, and pentaerythritol triacrylate. Useful di(meth)acrylates include, for example, ethylene glycol di(meth)acrylate, diethylene glycol di(meth)acrylate, triethylene glycol di(meth)acrylate, tetraethylene glycol di(meth)acrylate, 1,4-butanediol di(meth)acrylate, 1,6-hexanediol di(meth)acrylate, alkoxylated 1,6-hexanediol diacrylate, tripropylene glycol diacrylate, dipropylene glycol diacrylate, cyclohexane dimethanol di(meth)acrylate, alkoxylated cyclohexane dimethanol diacrylates, ethoxylated bisphenol A di(meth)acrylates, neopentyl glycol diacrylate, polyethylene glycol di(meth)acrylates, polypropylene glycol di(meth)acrylates, and urethane di(meth)acrylates. The branching agent 1,6-hexanediol diacrylate (HDDA) is particularly suitable. Typically the di(meth)acrylate branching agent is used in amounts ranging from 0.001 to 0.05 parts by weight per 100 parts by weight of the (meth)acrylate-based polymeric material.

The pre-polymerization monomer mixture used to prepare the (meth)acrylate-based polymeric material, may typically include an appropriate initiator. For polymerization by ultraviolet light, a photoinitiator is included. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, photoactive oximes and azo-type initiators. The photoinitiator may be used in an amount from about 0.001 to about 5.0 parts by weight, from about 0.01 to about 5.0 parts by weight, from 0.05 to 0.5 parts by weight, or even from 0.05 to 0.3 parts by weight per 100 parts by weight of total monomer.

The pre-polymerization monomer mixture used to prepare the (meth)acrylate-based polymeric material, may also be polymerized by thermal polymerization or by a combination of thermal and radiation polymerization. For thermal polymerization, a thermal initiator is included. Thermal initiators useful in the present disclosure include, but are not limited to azo, peroxide, persulfate, and redox initiators. Azo-type initiators, such as e.g. the "Vazo" line, commercially available from DuPont Chemical Co, are particularly preferred. The thermal initiator may be used in an amount from about 0.01 to about 5.0 parts by weight per 100 parts by weight of total monomer, preferably from 0.025 to 2 weight percent.

The pre-polymerization monomer mixture used to prepare the polymeric precursor composition of a pressure sensitive adhesive, in particular the (meth)acrylate-based polymeric precursor material, may also further comprise a co-polymerized type (II) photocrosslinker. Suitable co-polymerized type (II) photocrosslinkers for use herein will be easily identified by those skilled in the art, in the light of the present description.

In some exemplary aspects, the co-polymerized type (II) photocrosslinkers for use in the present disclosure are selected from the group consisting of mono-and multi-ethylenically unsaturated aromatic ketone comonomers free of ortho-aromatic hydroxyl groups such as those disclosed in U.S. Pat. No. 4,737,559 (Kellen et al.). Specific examples of mono-ethylenically unsaturated aromatic ketone comonomers include the copolymerizable photosensitive crosslinkers para-acryloxybenzophenone (ABP), para-acryloxyethoxybenzophenone (AEBP), para-N-(methylacryloxyethyl)-carbamoylethoxybenzophenone, 4-acryloyloxydiethoxy-4-chlorobenzophenone, para-acryloxyacetophenone, ortho-acrylamidoacetophenone, acrylated anthraquinones, and any combinations or mixtures thereof.

In a preferred aspect, the co-polymerized type (II) photocrosslinker for use in the present disclosure is selected from the group of mono-ethylenically unsaturated aromatic ketones. More preferably, the co-polymerized type (II) photocrosslinker for use in the present disclosure is selected from the group consisting of para-acryloxybenzophenone (ABP), para-acryloxyethoxybenzophenone (AEBP), para-N-(methylacryloxyethyl)-carbamoylethoxybenzophenone, 4-acryloyloxydiethoxy-4-chlorobenzophenone, para-acryloxyacetophenone, ortho-acrylamidoacetophenone, acrylated anthraquinones, and any combinations or mixtures thereof. Even more preferably, the co-polymerized type (II) photocrosslinker for use in the present disclosure is selected from the group consisting of para-acryloxybenzophenone (ABP), para-acryloxyethoxybenzophenone (AEBP), and any combinations or mixtures thereof.

The co-polymerized type (II) photocrosslinkers may typically be used in an amount from 0.06 to 1 parts, from 0.11 to 1 parts, from 0.16 to 1 parts, from 0.18 to 0.70 parts, or even from 0.20 to 0.50 parts by weight per 100 parts by weight of (meth)acrylate-based polymeric material (or of pre-polymerization monomer mixture used to prepare the (meth)acrylate-based polymeric material).

In one exemplary aspect of the (meth)acrylate-based polymeric material, the co-polymerized type (II) photocrosslinker for use herein may be co-polymerized into the (meth)acrylate-based polymeric material, i.e. co-polymerized together with the other monomers present into the pre-polymerization monomer mixture used to prepare the (meth)acrylate-based polymeric material.

The precursor composition of a pressure sensitive adhesive for use herein, and in particular the (meth)acrylate-based precursor composition of a pressure sensitive adhesive, may further comprise a tackifying resin. Suitable tackifying resin for use herein will be easily identified by those skilled in the art, in the light of the present description. The present disclosure is however not that limited as some precursors of a pressure sensitive adhesive for use herein may be free of tackifying resins.

Suitable tackifying resins include, for example, terpene phenolics, rosins, rosin esters, esters of hydrogenated rosins, synthetic hydrocarbon resins and combinations thereof. Especially suitable tackifying resins include the commercially available tackifying resins: FORAL 85E (a glycerol ester of highly hydrogenated refined gum rosin) commercially available from Eastman, Middelburg, NL), FORAL 3085 (a glycerol ester of highly hydrogenated refined wood rosin) commercially available from Hercules Inc., Wilmington, DE; ESCOREZ 2520 and ESCOREZ 5615 (aliphatic/aromatic hydrocarbon resins) commercially available from ExxonMobil Corp., Houston, TX; and Regalite 7100 (a partially hydrogenated hydrocarbon resin) commercially available from Eastman, Kingsport, Tennessee.

In some aspects, it may be desirable to use a mixture of two tackifying resins, where one of the tackifying resins comprises a high Tg tackifying resin with a glass transition temperature of at least 20°C, and the other comprises a low Tg tackifying resin with a glass transition temperature of no greater than 0°C. Such mixtures of tackifying resins are described, for example, in PCT Patent Publication No. WO 2010/002557 (Ma et al.). The high Tg tackifying resin is typically a solid at room temperature. Examples of suitable high Tg tackifying resin include, for example, terpenes, aliphatic- or aromatic-modified C5 to C9 hydrocarbons, and rosin esters. In some aspects, lower molecular weight hydrocarbons may be preferred, as compatibility with the acrylate base polymer decreases as the molecular weight of the hydrocarbon increases. In some aspects, the weight average molecular weight (Mw) of the high Tg tackifying resin is between 500 and 3000 gm/mole. In some aspects, the Mw of the high Tg tackifying resin is no greater than 1500, in some aspects no greater than 1000, or even no greater than 800 gm/mole.

The low Tg tackifying resin has a glass transition temperature of no greater than 0°C, in some aspects, no greater than -10°C, or even no greater than -20°C. Such materials are generally liquids at room temperature. There is no particular lower limit on the glass transition temperature of the low Tg tackifying resin, except that it must be greater than the Tg of the polymeric precursor composition of a pressure sensitive adhesive, in particular the (meth)acrylate-based polymeric precursor material. In some aspects, the Tg of the low Tg tackifying resin is at least 10°C greater, at least 20°C greater, or even at least 30°C greater than the Tg of the polymeric precursor composition of a pressure sensitive adhesive, in particular the (meth)acrylate-based polymeric precursor material. Generally, lower molecular weight compounds may be more desirable, as compatibility with the acrylate base polymer decreases as the molecular weight of the increases. Exemplary low Tg tackifying resins include terpene phenolic resins, terpenes, aliphatic- or aromatic-modified C₅ to C₉ hydrocarbons, and rosin esters. In some aspects, the weight average molecular weight (Mw) of the low Tg tackifying resin is between 300 and 1500 gm/mole. In some aspects, the Mw of the low Tg tackifying resin is no greater than 1000, in some aspects, no greater than 800, or even no greater than 500 gm/mole.

In some aspects, the pressure sensitive adhesive precursor compositions for use herein may comprise from 35 to 65 parts by weight of the high Tg tackifying resin per 100 parts by weight of polymeric precursor composition of a pressure sensitive adhesive, in particular (meth)acrylate-based polymeric precursor material. In some aspects, the adhesive precursors may comprise at least 40 parts by weight of the high Tg tackifying resin per 100 parts by weight of polymeric precursor composition of a pressure sensitive adhesive, in particular (meth)acrylate-based polymeric precursor material. In some aspects, the adhesive precursor compositions may comprise greater than 50 parts by weight or even at least 60 parts by weight of the high Tg tackifying resin per 100 parts by weight of polymeric precursor composition of a pressure sensitive adhesive, in particular (meth)acrylate-based polymeric material.

In some aspects, the adhesive precursor compositions may comprise from 2 to 20 parts by weight of low Tg tackifying resin per 100 parts by weight of polymeric precursor composition of a pressure sensitive adhesive. In some aspects, the adhesives may comprise at least from 5 to 18, or even from 5 to 17 parts by weight of low Tg tackifying resin per 100 parts by weight of polymeric precursor composition of a pressure sensitive adhesive, in particular (meth)acrylate-based polymeric material.

A wide variety of commercially available tackifying resins are available and are suitable for use as the high Tg tackifying resin and the low Tg tackifying resin. Especially suitable High Tg tackifying resins include the commercially available tackifying resins: FORAL 3085 and FORAL 85LB resins commercially available from Hercules Inc., Wilmington, DE; and SP-553 from Schenectady International, Schenectady, NY, with FORAL 3085 being especially desirable. Especially suitable Low Tg tackifying resins include the commercially available tackifying resins: ESCOREZ 2520 commercially available from ExxonMobil Corp., Houston, TX, STAYBELITE Ester 3-E commercially available from Eastman Chemical, Kingsport, TN, PICCOLYTE AO commercially available from Hercules, Inc., Wilimington, DE, and HERCOLYN D commercially available from Hercules, Inc., Wilimington, DE, with ESCOREZ 2520 being especially desirable.

In a preferred aspect, the tackifying resin is selected from the group consisting of terpene phenolics, rosins, rosin esters, esters of hydrogenated rosins, synthetic hydrocarbon resins, and any combinations or mixtures thereof. More preferably, the tackifying resin is selected from the group of esters of hydrogenated rosins.

The tackifying resin or resins may be added to the pressure sensitive adhesive precursor composition at levels typical in the art of pressure sensitive adhesives. Some pressure sensitive adhesives and in particular (meth)acrylate based pressure sensitive adhesives, require little or no tackifying resins to achieve desired pressure sensitive adhesive properties. Typical levels of tackifying resins are comprised between 5 and 40 parts by weight tackifying resin per 100 parts by weight of polymeric precursor composition of a pressure sensitive adhesive, in particular (meth)acrylate-based polymeric precursor material.

The use of high levels of tackifying agent(s) may in some applications be desirable as this can increase the tackiness of the pressure sensitive adhesive, making it aggressively adhere to wide range of substrates without the need to apply pressure. Typical levels of tackifying agent(s) to give the so-called "highly tackified pressure sensitive adhesive" are generally greater than 40 parts by weight tackifying resin per 100 parts by weight of polymeric precursor composition of a pressure sensitive adhesive, in particular (meth)acrylate-based polymeric precursor material. In some particular aspects, the amount of tackifying resin present in the pressure sensitive adhesive precursor composition is greater than 45 parts, greater than 50 parts, greater than 55 parts, or even greater than 60 parts by weight per 100 parts by weight of polymeric precursor composition of a pressure sensitive adhesive, in particular (meth)acrylate-based polymeric precursor material. In some other aspects, the pressure sensitive adhesive precursor composition comprises from 45 to 85 parts, from 45 to 75 parts, from 45 to 65 parts, or even from 50 to 60 parts by weight of tackifying resin per 100 parts by weight of polymeric precursor composition of a pressure sensitive adhesive, in particular (meth)acrylate-based polymeric precursor material.

Typically, the pressure sensitive adhesive precursor composition for use herein may further include, as an optional ingredient, a chain transfer agent to control the molecular weight of the polymer. Advantageously, the chain transfer agent is comprised in the (pre-polymerization) monomer mixture used to prepare the polymeric precursor composition of a pressure sensitive adhesive, in particular the (meth)acrylate-based polymeric material. Chain transfer agents are materials which regulate free radical polymerization and are generally known in the art. Suitable chain transfer agents include halogenated hydrocarbons such as carbon tetrabromide; sulfur compounds such as lauryl mercaptan, butyl mercaptan, ethanethiol, isooctylthioglycolate (IOTG), 2-ethylhexyl thioglycolate, 2-ethylhexyl mercaptopropionate, pentaerythritol tetrakis(3-mercaptopropionate), 2-mercaptoimidazole, and 2-mercaptoethyl ether; and solvents such as ethanol and isopropanol.

As will be apparent to those skilled in the art, the pressure sensitive adhesive precursor composition for use herein may further include a variety of additional additives depending on the envisaged properties for the resulting pressure sensitive adhesive. Exemplary additional additives include, but are not limited to, one or more plasticizers, UV stabilizers, antistatic agents, colorants, antioxidants, fungicides, bactericides, organic and/or inorganic filler particles, pigments, and any combinations or mixtures thereof. Advantageously, the additional additives for use herein are non-polymerizable additives. As will be apparent to those skilled in the art, additional additives for use herein may be included at appropriate timing and in the appropriate polymeric or pre-polymeric matrix.

According to an another aspect of the present disclosure, the pressure sensitive adhesive precursor composition for use herein is crosslinkable, in particular radiation crosslinkable.

Accordingly in an exemplary aspect, the process of manufacturing a pressure sensitive adhesive according to the present disclosure, comprises the steps of:
a) providing a crosslinkable precursor composition of a pressure sensitive adhesive;
b) incorporating a degassing additive into the precursor composition of a pressure sensitive adhesive, wherein the degassing additive comprises a porous carrier and an aqueous medium, wherein the porous carrier comprises a polymeric material and wherein the aqueous medium is absorbed into the porous carrier and comprises a surfactants;
c) allowing the degassing additive to release water into the precursor composition of a pressure sensitive adhesive;
d) extracting the water released from the degassing additive, from the precursor composition of a pressure sensitive adhesive; and
e) optionally, crosslinking, in particular radiation crosslinking, more in particular UV radiation crosslinking, the crosslinkable precursor composition of a pressure sensitive adhesive thereby forming a crosslinked pressure sensitive adhesive.

In an advantageous aspect, the pressure sensitive adhesive precursor composition for use herein is holt melt processable. Accordingly, in one aspect, the process of manufacturing a pressure sensitive adhesive according to the present disclosure may comprise a hotmelt processing step, and the precursor composition of a pressure sensitive adhesive advantageously comprise a polymer melt.

However, the disclosure is not that limited, as according to another advantageous aspect, the pressure sensitive adhesive precursor composition may be provided as a solvent borne adhesive system, which is therefore solvent processable, or as a water based system.

Hot melt processable pressure sensitive adhesive precursor compositions for use herein are typically hot melt mixed blends comprising typically a polymeric precursor composition of a pressure sensitive adhesive, in particular a (meth)acrylate-based polymeric precursor material; optionally a crosslinker, in particular a type (II) photocrosslinker; and a tackifying resin, Typically, the hot melt processable pressure sensitive adhesive precursor composition may further comprise a thermoplastic material.

The hot melt processable pressure sensitive adhesive precursor compositions for use herein may be prepared by a variety of hot melt techniques. Generally, the methods comprise providing a hot melt mixing apparatus, providing a polymeric precursor composition of a pressure sensitive adhesive, in particular (meth)acrylate-based polymeric precursor material; optionally a crosslinker, in particular a type (II) photocrosslinker; and a tackifying resin, mixing the ingredients in the hot melt mixing apparatus to prepare a hot melt blend, removing the blend from the hot melt mixing apparatus to form a hot melt processable pressure sensitive adhesive.

As described below, a variety of additional additives can be included in the hot melt blend including one or more plasticizers, crosslinkers, UV stabilizers, antistatic agents, colorants, antioxidants, fungicides, bactericides, organic and/or inorganic filler particles, and the like. Optionally, low levels of plasticizer (e.g., less than about 10 parts by weight) may be added to the hot melt blend. A wide variety of commercially available materials described as "plasticizers" are suitable, as long as the added plasticizer is compatible with the other components of the hot melt blend. Representative plasticizers include polyoxyethylene aryl ether, dialkyl adipate, 2-ethylhexyl diphenyl phosphate, t-butylphenyl diphenyl phosphate, di(2-ethylhexyl) adipate, toluenesulfonamide, dipropylene glycol dibenzoate, polyethylene glycol dibenzoate, polyoxypropylene aryl ether, dibutoxyethoxyethyl formal, and dibutoxyethoxyethyl adipate. Especially suitable is the plasticizer SANTICIZER 141 (2-ethylhexyl diphenyl phosphate) commercially available from Ferro Corp., Cleveland, OH.

A variety of hot melt mixing techniques using a variety of hot melt mixing equipment are suitable for preparing the hot melt processable pressure sensitive adhesive precursor compositions and hot melt processable pressure sensitive adhesives. Both batch and continuous mixing equipment may be used. Examples of batch methods include those using a BRABENDER (e. g. a BRABENDER PREP CENTER, commercially available from C.W. Brabender Instruments, Inc.; South Hackensack, NJ) or BANBURY internal mixing and roll milling equipment (e.g. equipment available from Farrel Co.; Ansonia, CN). Examples of continuous methods include single screw extruding, twin screw extruding, disk extruding, reciprocating single screw extruding, pin barrel single screw extruding, planetary extruding, and ring extruding. Continuous methods can utilize distributive elements, pin mixing elements, static mixing elements, and dispersive elements such as MADDOCK mixing elements and SAXTON mixing elements. A single hot melt mixing apparatus may be used, or a combination of hot melt mixing equipment may be used to prepare the hot melt blends and the hot melt processable pressure sensitive adhesives. In some embodiments, it may be desirable to use more than one piece of hot melt mixing equipment. For example, one extruder, such as, for example, a single screw extruder, can be used to hot melt process the hot melt processable elastomeric (meth)acrylate random copolymer contained within a thermoplastic pouch. The output of this extruder can be fed into a second extruder, for example, a twin screw extruder for hot melt mixing with the additional components. The hot melt blends described above are used to form hot melt processable pressure sensitive adhesives upon completion of the hot melt blending process.

In a preferred aspect of the present disclosure, continuous hot melt mixing techniques are used for preparing the hot melt processable pressure sensitive adhesive precursor compositions and hot melt processable pressure sensitive adhesives. More preferably, extrusion techniques, in particular twin screw extrusion techniques are used for preparing the hot melt processable pressure sensitive adhesives and precursor compositions thereof.

In another preferred aspect of the present disclosure, the degassing additive as described hereinafter is added during continuous hot melt mixing processing steps, in particular during hot melt extrusion processing steps, preferably twin screw extrusion processing steps of the corresponding hot melt processable pressure sensitive adhesives and precursor compositions thereof.

The output of the hot melt mixing is coated onto a substrate to form an adhesive layer. If a batch apparatus is used, the hot melt blend can be removed from the apparatus and placed in a hot melt coater or extruder and coated onto a substrate. If an extruder is used to prepare the hot melt blend, the blend can be advantageously directly extruded onto a substrate to form an adhesive layer in a continuous forming method.

In a preferred aspect of the present disclosure, an extruder is used to prepare the hot melt processable pressure sensitive adhesive precursor blend, and the resulting hot melt blend is directly coated after extrusion.

In the continuous forming method, the adhesive can be drawn out of a film die and subsequently contacted to a moving plastic web or other suitable substrate. If the adhesive is to be part of a tape, the substrate may be a tape backing. In some methods, the tape backing material is coextruded with the adhesive from a film die and the multilayer construction is then cooled to form the tape in a single coating step. If the adhesive is to be a transfer tape, the adhesive layer may be a free standing film and the substrate may be a release liner or other releasing substrate. After forming, the adhesive layer or film can be solidified by quenching using both direct methods (e.g. chill rolls) and indirect methods (e.g. air or gas impingement).

In alternative aspects of the disclosure however, the pressure sensitive adhesive precursor composition may be coated using any other conventional technique well-known in the art, such as e.g. solution coating, emulsion coating, extrusion coating, coextrusion coating, solventless coating, waterborne coating, and any combinations thereof.

In another aspect, the resulting pressure sensitive adhesive precursor layer, in particular the radiation crosslinkable pressure sensitive adhesive precursor layer, is then subjected to a crosslinking step, in particular by exposure to suitable radiation, in particular to high intensity UV radiation, to effect crosslinking. Typically, the crosslinking step is performed by exposure to high intensity ultraviolet (UV) radiation using commonly known UV lamps with an emission spectra between 250 to 400 nanometers (nm), and with an intensity between about 0.1 to about 1000 mW/cm².

The pressure sensitive adhesive precursor composition, in particular the radiation crosslinkable pressure sensitive adhesive precursor composition according to the disclosure may be obtained using techniques commonly known to those skilled in the art of formulating pressure sensitive adhesive formulations. The pressure sensitive adhesive polymeric precursor composition may be obtained in a conventional manner, using e.g. solution, bulk, or emulsion polymerization techniques. Preferably, the pressure sensitive adhesive polymeric precursor composition for use herein is advantageously obtained using bulk or solution polymerization using thermal or UV techniques.

Typically, the polymerization steps for the pressure sensitive adhesive polymeric precursor composition are effected by exposure to ultraviolet (UV) radiation as described in U.S. Pat. No. 4,181,752 (Martens et al.). In some executions, the polymerization is carried out with UV black lights having over 60 percent, or over 75 percent of their emission spectra between 280 to 400 nanometers (nm), with an intensity between about 0.1 to about 25 mW/cm².

Suitable porous carriers for use herein may be easily identified by those skilled in the art in the light of the present disclosure. Porous carriers for use herein comprise a polymeric material, in particular an hydrophobic polymeric material, such as e.g. thermoplastics polymers and elastomers.

Advantageously, the polymeric material is selected from the group consisting of polyolefins, polyesters, polystyrenes, polyamides, polycarbonates, polyvinyl chlorides, polyurethanes, polymethacrylates, fluoropolymers, polyacrylic acids, and any combinations or mixtures thereof.

Other specific polymeric materials suitable for manufacturing the porous carrier for use herein, are selected form the group consisting of HDPE (high-density polyethylene), LDPE (low-density polyethylene), LLDPE (linear low-density polyethylene), UHMW PE (ultrahigh-molecular-weight polyethylene), mPE (metallocene PE), polypropylene, ethylene-propylene copolymer, polyisobutene, PB (polybutylene), PMP (polymethylpentene), PTFE (polytetrafluoroethylene), FEP (perfluoroethylene-propylene copolymer), CTFE (polychlorotrifluoroethylene), ECTFE (ethylene-chloro-trifluoroethylene copolymer), ETFE (ethylene-tetra-fluoroethylene copolymer, tetrafluoroethylene-propylene copolymer, polyvinylidene fluoride, polyvinyl chloride, copolymer of tetrafluoroethylene and hexafluoropropylene, copolymer of tetrafluoroethylene and perfluoroalkyl vinyl ether, copolymer of ethylene-tetrafluoroethylene, PC (polycarbonate), polystyrene, styrene-acrylonitrile copolymer, styrene-butadiene copolymer, acrylonitrile-butadiene-styrene copolymers, PBT (polybutylene terephthalate), PET (polyethylene terephthalate), PA (polyamides), and any combinations or mixtures thereof.

According to a preferred aspect, the porous carrier for use herein comprises a polymeric material selected from the group of polyolefins, preferably from the group consisting of polypropylene, polyethylene, and any combinations or mixtures thereof. In one preferred aspect, the porous carrier for use herein comprises a polymeric material comprising polypropylene.

Typically, the porous carriers for use herein are in the form of discrete particles having at least to some extent an open-pore structure, and having for example any of a sponge-like structure, cellular microstructure or network-like structure.

The porosity of the porous carrier particles for use herein is typically at least 30% by volume, at least 50% by volume, or even at least 60% by volume. The porosity of the carrier particles for use herein is in particular from 50 to 80% by volume. The porosity (by volume) is measured by methods well known to the person skilled in the art. By way of example, the porosity of the carrier particles for use herein can be determined by a pycnometric test method using water as non-wetting liquid, or by means of suitable intrusion methods, e.g. by mercury intrusion.

The average size of the carrier particles for use herein is typically from 10 to 10 000 µm, from 200 to 7000 µm, from 500 to 5000 µm, from 1000 to 4000 µm, or even from 1500 to 3000 µm. The average particle size is typically determined microscopically by using a representative specimen amount and micrometer lens system or preferably a suitable image evaluation method. Measurement methods of this type are known to the person skilled in the art.

According to a particular aspect, the average pore diameter of the carrier particles for use herein is typically from 0.5 to 500 µm, from 1 to 400 µm, from 1 to 300 µm, from 1 to 200 µm, or even from 1 to 100 µm. The average pore diameter can be determined by well known measurement methods. By way of example, the average pore size is determined on the basis of digitalized scanning electron micrographs of images of fractured surfaces of the specimens, these being evaluated with the aid of suitable image analysis software. By way of example, the pore diameter of about 50 to 100 pores may be measured in pm from a scanning electron micrograph. The relevant average pore diameter is typically calculated as the average of the individual values.

Suitable porous carrier particles for use herein and method of production thereof are comprehensively described in e.g. US 2007/0042183 (Stenzel et al.).

The aqueous medium comprises a surfactant. In the context of the present disclosure, any of non-ionic, anionic, cationic or amphoteric surfactants, commonly known in the art, may be used herein.

Non-ionic surfactants may be advantageously used in the context of the present disclosure. Suitable non-ionic surfactants for use herein are typically selected from the group consisting of fatty-acid glycerides (such as e.g. monoglycerides or diglycerides), polyglycol ether surfactants (such as e.g. fatty alcohol polyglycol ethers), alkyl phenol polyglycol ethers, fatty acid polyglycol ethers, fatty acid amide polyglycol ethers, fatty acid glycol esters (such as e.g. fatty acid ethylene glycol esters or fatty acid diethylene glycol esters), fatty acid mono-, di- or tri-esters of sorbitan, fatty acid amides (such as e.g. fatty acid monoethanolamide or fatty acid diethanolamide), and any combinations or mixtures thereof. Advantageously, fatty acid glycerides, in particularl glycerol monooleate or glycerol monostearate, may be used herein.

Alternatively suitable surfactants for use herein may be easily identified by those skilled in the art, in the light of the present disclosure. By way of example, suitable surfactants for use herein are described in e.g. US 2007/0042183 (Stenzel et al.).

Exemplary surfactants include, but are not limited to, those selected from the group consisting of polyethylene glycols, polyglycol ethers, and any combinations of mixtures thereof. Preferred surfactants for use herein are selected from the group of polyethylene glycols.

Advantageously, the aqueous medium for use herein may further comprise optional additional additives. Suitable adhesive additives for use herein may be easily identified by those skilled in the art, in the light of the present disclosure, and will very much depend on the envisaged properties for the resulting pressure sensitive adhesive. Exemplary additional additives include, but are not limited to, plasticizers, antistatic agents, colorants, antioxidants, fungicides, bactericides, biocides, organic and/or inorganic fillers, pigments, antifogging agents, flame retardants, lubricant, UV stabilizers, light stabilizers, heat stabilizers, UV filters, foaming agents, optical brighteners, and any combinations of mixtures thereof.

The aqueous medium for use herein may typically be incorporated into the porous carrier by using techniques well known to those skilled in the art. Suitable techniques include, but are not limited to, wetting and impregnation techniques.

The incorporation of the aqueous medium into the porous carrier (particles) for use in the present disclosure may advantageously take place by bringing the porous carrier (particles) into contact with the aqueous medium, if appropriate with shaking and/or stirring, for a period of typically at least 10 min, at least 30 min, at least 60 min, at least 70 min, or even at least 90 min.

In order to accelerate the wetting/impregnation procedure, it might advantageous to use ultrasound and/or to apply a vacuum. An alternative method for incorporation of the aqueous medium into the porous carrier consists in immersing the porous carrier directly into the aqueous medium for a sufficiently long period, to impregnate the entire accessible surface if possible. An ultrasound bath can be used, or a vacuum applied, to assist the impregnation process.

In a particular aspect, the degassing additive for use herein comprises water in an amount comprised between 30 wt% and 70 wt%, between 40 wt% and 65 wt%, between 45 wt% and 60 wt%, or even between 45 wt% and 55 wt%, by weight of the degassing additive.

According to the particular aspect whereby the aqueous medium comprises a surfactant, the degassing additive for use herein comprises a surfactant in an amount comprised between 10 wt% and 55 wt%, between 15 wt% and 50 wt%, between 20 wt% and 45 wt%, or even between 30 wt% and 40 wt%, by weight of the degassing additive.

In a preferred aspect, the degassing additive for use herein is incorporated in the precursor composition of a pressure sensitive adhesive in dry form, preferably in a free-flowing particulate form. The term "dry form" is herewith meant to express that the degassing additive for use herein may be conveniently handled without being wet, damp, moist, humid or sticky.

The process of manufacturing a pressure sensitive adhesive according to the present disclosure comprises the step of allowing the degassing additive to release the aqueous medium into the precursor composition of a pressure sensitive adhesive. The step of allowing the degassing additive to release the aqueous medium into the precursor composition of a pressure sensitive adhesive may be performed by using techniques that those skilled in the art may easily identify, in the light of the present disclosure. Suitable techniques include, but are not limited to, heating, stirring, mixing, melt mixing, hotmelt mixing, shaking, ultra sounding, applying a vacuum, and any combinations thereof.

The process of manufacturing a pressure sensitive adhesive according to the present disclosure comprises the step of extracting the water released from the degassing additive, from the precursor composition of a pressure sensitive adhesive. The step of extracting the water released from the degassing additive, from the precursor composition of a pressure sensitive adhesive may be performed by using techniques that those skilled in the art may easily identify, in the light of the present disclosure. Suitable techniques include, but are not limited to, heating, stirring, mixing, melt mixing, hotmelt mixing, shaking, ultra sounding, applying a vacuum, and any combinations thereof.

In a particular aspect, the water released from the degassing additive is extracted in gaseous form by using techniques that those skilled in the art may easily identify, in the light of the present disclosure. According to a preferred execution, the water released from the degassing additive is extracted by using a degassing step, more preferably by using a vacuum-assisted degassing step.

The process of manufacturing a pressure sensitive adhesive according to the present disclosure may further comprise the step of allowing volatile organic compounds to be extracted from the precursor composition of a pressure sensitive adhesive together with the water. In this particular execution, the water released from the degassing additive is acting as a so-called "entraining agent".

In some other exemplary aspects, the process of manufacturing a pressure sensitive adhesive according to the present disclosure may comprise the step of allowing volatile organic compounds to be absorbed into the porous carrier. In a preferred aspect of the disclosure, volatile organic compounds are entrapped into the pores of the porous carrier.

The process of manufacturing a pressure sensitive adhesive according to the present disclosure may be advantageously performed by using batch methods or continuous processing methods. Preferably, the manufacturing a pressure sensitive adhesive according to the present disclosure is performed by using continuous processing methods, in particular by using suitable continuous mixing/extruding equipments, as described hereinbefore.

According to another aspect, the present disclosure relates to a process of reducing volatile organic compounds in a pressure sensitive adhesive, the process comprising the steps of:
a) providing a precursor composition of a pressure sensitive adhesive;
b) incorporating a degassing additive into the precursor composition of a pressure sensitive adhesive, wherein the degassing additive comprises a porous carrier and an aqueous medium, wherein the porous carrier comprises a polymeric material and wherein the aqueous medium is absorbed into the porous carrier and comprises a surfactant;
c) allowing the degassing additive to release the aqueous medium into the precursor composition of a pressure sensitive adhesive; and
d) extracting the water released from the degassing additive, from the precursor composition of a pressure sensitive adhesive.

The precursor composition of a pressure sensitive adhesive, the degassing additive, the porous carrier and the aqueous medium for use in the process of reducing volatile organic compounds in a pressure sensitive adhesive may be as described above in the context of describing the process of manufacturing a pressure sensitive adhesive.

According to another aspect of the present disclosure, it is provided a pressure sensitive adhesive obtainable from the process of manufacturing a pressure sensitive adhesive as described above.

In a preferred aspect, the pressure sensitive adhesive obtainable from the process of manufacturing a pressure sensitive adhesive has a level of volatile organic compounds of less than 1000 µg/g, less than 900 µg/g, less than 800 µg/g, less than 700 µg/g, less than 600 µg/g, less than less than 500 µg/g, or even less 400 µg/g, when measured according to test method VDA 278.

According to still another aspect, the present disclosure relates to a precursor composition of a pressure sensitive adhesive comprising a degassing additive, wherein the degassing additive comprises a porous carrier and an aqueous medium, wherein the porous carrier comprises a polymeric material and wherein the aqueous medium is absorbed into the porous carrier and comprises a surfactant.

The degassing additive, the porous carrier and the aqueous medium for use in the precursor composition of a pressure sensitive adhesive according to another aspect of the present disclosure, may be as described above in the context of describing the process of manufacturing a pressure sensitive adhesive.

In another aspect, the pressure sensitive adhesive, in particular the radiation crosslinked pressure sensitive adhesive, as above described, is coated on a substrate, wherein the (radiation crosslinked) pressure sensitive adhesive coating has typically a thickness of at least 20µm, or greater than 40 µm, greater than 50 µm, greater than 70 µm, greater than 80 µm, greater than 90 µm, or even greater than 100 µm.

The (radiation crosslinked) pressure sensitive adhesives and (radiation crosslinked) pressure sensitive adhesive precursor compositions of the disclosure, in particular the hot melt and solution processable adhesives and precursor compositions, may advantageously be used to prepare a wide range of adhesive tapes and articles. Many of these tapes and articles contain backings or other substrates to support the layer of adhesive. Other adhesive tapes and articles do not contain a backing or substrate layer and therefore are free standing adhesive layers. Double-sided tapes are an example of such an adhesive article. On type of double-sided tapes, also called "transfer tapes", are adhesive tapes that have adhesive on both exposed surfaces. In some transfer tapes, the exposed surfaces are simply the two surfaces of a single adhesive layer. Other double-sided tapes are multi-layer tapes with at least two adhesive layers that may be the same or different, and in some instances intervening layers that may not be adhesive layers. For example, a multi-layer tape may be a 3 layer construction with an adhesive layer, a film layer and another adhesive layer. The film layer can provide handling and/or tear strength or other desirable properties. In this disclosure, double-sided adhesives are prepared that comprise one free standing layer of pressure sensitive adhesive.

Since the double-sided adhesives are free standing, they must have sufficient handling strength to be handled without the presence of a supporting layer. However, in many aspects it is desirable that the adhesive layer be readily tearable, that is to say that the adhesive layer can be readily torn by hand without requiring the use of a cutting implement such as a knife, scissors, or a razor blade.

Advantageously, the methods described in this disclosure may be used to form a variety of adhesive articles. Among these adhesive articles are tapes, including transfer tapes. As described above, transfer tapes may be free standing adhesive films with adhesive on both exposed surfaces. Transfer tapes are widely used in the printing and paper making industries for making flying splices, as well being used for a variety of bonding, mounting, and matting applications both by industry and by consumers.

Transfer tapes can be prepared in particular by hot melt coating the hot melt blends described above onto a release surface such as a release liner. "Release liners" are well known film articles that have a low affinity for adhesives, especially pressure sensitive adhesives. A wide variety of release liners are known and are suitable for use with the pressure sensitive adhesives of this disclosure. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like). At least some release liners are coated with a layer of a release agent such as a silicone-containing material or a fluorocarbon-containing material. Exemplary release liners include, but are not limited to, liners commercially available from CP Film (Martinsville, Va.) under the trade designation "T-30" and "T-10" that have a silicone release coating on polyethylene terephthalate film. The liner can have a microstructure on its surface that is imparted to the adhesive to form a microstructure on the surface of the adhesive layer. The liner can then be removed to expose an adhesive layer having a microstructured surface.

In many transfer tape embodiments, it is desirable that the transfer tape be hand tearable, that is to say that the dispensed adhesive can be torn by hand without the need for cutting of the transfer tape. This is particularly true when the transfer tape is dispensed from a bladeless hand held dispenser, such as the SCOTCH ATG dispensers commercially available from 3M Company, St. Paul, MN. The pressure sensitive adhesives of the present disclosure not only have the handling strength required of transfer tape, but also are typically hand tearable.

According to another aspect, the present disclosure relates to the use of a degassing additive comprising a porous carrier and an aqueous medium, wherein the porous carrier comprises a polymeric material and wherein the aqueous medium is absorbed into the porous carrier and comprises a surfactant, for reducing volatile organic compounds in a pressure sensitive adhesive.

According to still another aspect, the present disclosure relates to the use of a degassing additive comprising a porous carrier and an aqueous medium, wherein the porous carrier comprises a polymeric material and wherein the aqueous medium is absorbed into the porous carrier and comprises a surfactant, as an entraining agent for removal of volatile organic compounds in a pressure sensitive adhesive.

According to still another aspect, the present disclosure is directed to the use of a pressure sensitive adhesive as described above for industrial applications, in particular for indoor construction applications and automotive applications.

According to still another aspect, the present disclosure is directed to the use of a pressure sensitive adhesive as described above for consumer applications and office supply applications.
Item 1 is a process of manufacturing a pressure sensitive adhesive, the process comprising the steps of:
   a) providing a precursor composition of a pressure sensitive adhesive;
   b) incorporating a degassing additive into the precursor composition of a pressure sensitive adhesive, wherein the degassing additive comprises a porous carrier and an aqueous medium wherein the porous carrier comprises a polymeric material and wherein the aqueous medium is absorbed into the porous carrier and comprises a surfactant;
   c) allowing the degassing additive to release the aqueous medium into the precursor composition of a pressure sensitive adhesive; and
   d) extracting the water released from the degassing additive, from the precursor composition of a pressure sensitive adhesive.
Item 2 is a process according to any of the preceding items, wherein the aqueous medium is entrapped into the pores of the porous carrier.
Item 3 is a process according to any of the preceding items, wherein water is extracted in gaseous form, preferably by using a degassing step, more preferably by using a vacuum-assisted degassing step.
Item 4 is a process according to any of the preceding items, which further comprises the step of allowing volatile organic compounds to be extracted from the precursor composition of a pressure sensitive adhesive together with the water.
Item 5 is a process according to any of the preceding items, which further comprises the step of allowing volatile organic compounds to be absorbed into the porous carrier. In a preferred aspect, the volatile organic compounds are entrapped into the pores of the porous carrier.
Item 6 is a process according to any of the preceding items, wherein the porous carrier comprises an hydrophobic polymer, preferably a polymeric material selected from the group consisting of polyolefins, polyesters, polystyrenes, polyamides, polycarbonates, polyvinyl chlorides, polyurethanes, polymethacrylate, fluoropolymers, polyacrylic acids, and any combinations or mixtures thereof.
Item 7 is a process according to any of the preceding items, wherein the porous carrier comprises a polymeric material selected from the group of polyolefins, preferably from the group consisting of polypropylene, polyethylene, and any combinations or mixtures thereof.
Item 8 is a process according to any of the preceding items, wherein the surfactant is selected from the group consisting of polyethylene glycols, polyglycol ethers, and any combinations of mixtures thereof.
Item 9 is a process according to any of the preceding items, wherein the degassing additive is incorporated in the precursor composition of a pressure sensitive adhesive in dry form, preferably in a free-flowing particulate form.
Item 10 is a process according to any of the preceding items, wherein the degassing additive comprises water in an amount comprised between 30 wt% and 70 wt%, between 40 wt% and 65 wt%, between 45 wt% and 60 wt%, or even between 45 wt% and 55 wt%, by weight of the degassing additive.
Item 11 is a process according to any of the preceding items, which comprises a hotmelt processing step, preferably continuous hotmelt mixing processing steps, more preferably hotmelt extrusion processing steps, in particular twin screw extrusion processing steps.
Item 12 is a process according to item 11, wherein the degassing additive is incorporated into the precursor composition of a pressure sensitive adhesive during the hotmelt processing step, preferably during continuous hot melt mixing processing steps, more preferably during hot melt extrusion processing steps, even more preferably during twin screw extrusion processing steps.
Item 13 is a process according to any of the preceding items, wherein the precursor composition of a pressure sensitive adhesive comprises a polymer melt.
Item 14 is a process according to any of the preceding items, wherein the amount of water incorporated by the degassing additive into the precursor composition of a pressure sensitive adhesive is comprised between 0.005 wt% and 5.0 wt%, between 0.25 wt% and 3.0 wt%, between 0.5 wt% and 2.5 wt%, or even between 0.8 wt% and 1.5 wt%, by weight of the precursor composition of a pressure sensitive adhesive.
Item 15 is a process according to any of the preceding items, wherein the precursor composition of a pressure sensitive adhesive comprises the degassing additive in an amount comprised between 0.01 wt% and 10 wt%, between 0.5 wt% and 5 wt%, between 1.0 wt% and 3.0 wt%, or even between 1.5 wt% and 2.5 wt%, by weight of the precursor composition of a pressure sensitive adhesive.
Item 16 is a process according to any of the preceding items, wherein the degassing additive comprises a surfactant in an amount comprised between 10 wt% and 55 wt%, between 15 wt% and 50 wt%, between 20 wt% and 45 wt%, or even between 30 wt% and 40 wt%, by weight of the degassing additive.
Item 17 is a process according to any of the preceding items, wherein the precursor composition of a pressure sensitive adhesive comprises a (meth)acrylate-based polymeric material.
Item 18 is a process of reducing volatile organic compounds in a pressure sensitive adhesive, the process comprising the steps of:
   a) providing a precursor composition of a pressure sensitive adhesive;
   b) incorporating a degassing additive into the precursor composition of a pressure sensitive adhesive, wherein the degassing additive comprises a porous carrier and an aqueous medium, wherein the porous carrier comprises a polymeric material and wherein the aqueous medium is absorbed into the porous carrier and comprises a surfactant;
   c) allowing the degassing additive to release the aqueous medium into the precursor composition of a pressure sensitive adhesive; and
   d) extracting the water released from the degassing additive, from the precursor composition of a pressure sensitive adhesive.
Item 19 is a process according to 7 item 17, wherein the aqueous medium is entrapped into the pores of the porous carrier.
Item 20 is a pressure sensitive adhesive obtainable from the process according to any of items 1 to 17.
Item 21 is a pressure sensitive adhesive according to item 20, which has a level of volatile organic compounds of less than 1000 µg/g, less than 900 µg/g, less than 800 µg/g, less than 700 µg/g, less than 600 µg/g, less than less than 500 µg/g, or even less 400 µg/g, when measured according to test method VDA 278.
Item 22 is a precursor composition of a pressure sensitive adhesive comprising a degassing additive, wherein the degassing additive comprises a porous carrier and an aqueous medium, wherein the porous carrier comprises a polymeric material and wherein the aqueous medium is absorbed into the porous carrier and comprises a surfactant.
Item 23 is a precursor composition according to any of item 22, wherein the porous carrier comprises an hydrophobic polymer, preferably a polymeric material selected from the group consisting of polyolefins, polyesters, polystyrenes, polyamides, polycarbonates, fluoropolymers, polyacrylic acids, and any combinations or mixtures thereof.
Item 24 is a precursor composition according to item 23, wherein the porous carrier comprises a polymeric material selected from the group of polyolefins, preferably from the group consisting of polypropylene, polyethylene, and any combinations or mixtures thereof.
Item 25 is a precursor composition according to any of items 22 to 24, wherein the surfactant is selected from the group consisting of polyethylene glycols, polyglycol ethers, and any combinations of mixtures thereof.
Item 26 is a precursor composition according to any of items 22 to 25, wherein the degassing additive comprises water in an amount comprised between 30 wt% and 70 wt%, between 40 wt% and 65 wt%, between 45 wt% and 60 wt%, or even between 45 wt% and 55 wt%, by weight of the degassing additive.
Item 27 is a precursor composition according to any of items 22 to 26, wherein the amount of water incorporated by the degassing additive into the precursor composition of a pressure sensitive adhesive is comprised between 0.005 wt% and 5.0 wt%, between 0.25 wt% and 3.0 wt%, between 0.5 wt% and 2.5 wt%, or even between 0.8 wt% and 1.5 wt%, by weight of the precursor composition of a pressure sensitive adhesive.
Item 28 is a precursor composition according to any of items 22 to 27, which comprises the degassing additive in an amount comprised between 0.01 wt% and 10 wt%, between 0.5 wt% and 5 wt%, between 1.0 wt% and 3.0 wt%, or even between 1.5 wt% and 2.5 wt%, by weight of the precursor composition of a pressure sensitive adhesive.
Item 29 is a precursor composition according to any of items 22 to 28, wherein the degassing additive comprises a surfactant in an amount comprised between 10 wt% and 55 wt%, between 15 wt% and 50 wt%, between 20 wt% and 45 wt%, or even between 30 wt% and 40 wt%, by weight of the degassing additive.
Item 30 is a precursor composition according to any of items 22 to 29, wherein the pressure sensitive adhesive comprises a (meth)acrylic-based polymeric material.
Item 31 is a precursor composition according to any of items 22 to 30, which comprises a polymer melt.
Item 32 is the use of a degassing additive comprising a porous carrier and an aqueous medium, wherein the porous carrier comprises a polymeric material and wherein the aqueous medium is absorbed into the porous carrier and comprises a surfactant, for reducing volatile organic compounds in a pressure sensitive adhesive.
Item 33 is the use of a degassing additive comprising a porous carrier and an aqueous medium, wherein the porous carrier comprises a polymeric material and wherein the aqueous medium is absorbed into the porous carrier and comprises a surfactant, as an entraining agent for removal of volatile organic compounds in a pressure sensitive adhesive.
Item 34 is the use according to any of items 32 to 33, wherein the aqueous medium is is entrapped into the pores of the porous carrier.
Item 35 is the use according to any of items 32 to 34, wherein the pressure sensitive adhesive comprises a (meth)acrylic-based polymeric material.
Item 36 is the use of a pressure sensitive adhesive according to item 20 or 21 for industrial applications, in particular for indoor construction applications and automotive applications.
Item 37 is the use of a pressure sensitive adhesive according to item 20 or 21 for consumer applications and office supply applications. Preferably, consumer applications include non-medical consumer applications, medical consumer applications, and healthcare consumer applications.
Item 38 is the use of a pressure sensitive adhesive according to item 20 or 21 for the manufacture of an adhesive tape, preferably a double-sided tape.

### EXAMPLES

The disclosure is further illustrated by the following examples. These examples are merely for illustrative purposes only and are not meant to be limiting on the scope of the appended claims.

### Test Methods

### 1. VOC reduction according to the VDA 278 standard (October 2011)

This test method is used for the determination of volatile organic compounds (VOC value) from non-metallic materials for automobiles, using thermal desorption and cryofocussing analysis.

### 2. FOG reduction according to the VDA 278 standard (October 2011)

This test method is used for the determination of condensable organic substances (FOG value) from non-metallic materials for automobiles, using thermal desorption and cryofocussing analysis.

### 3. 180° Peel adhesion according to FINAT Test Method FTM-1 (February 2009) on ABS:

This test method covers the measurement of the peel adhesion of pressure-sensitive adhesive tapes. Peel adhesion is measured against ABS as test substrate.

### 4. Static Shear according to FINAT Test Method FTM-8 (February 2009) on stainless steel at 85°C

### Shear strength on stainless steel (SS):

This test method determines the ability of pressure-sensitive adhesive tapes to remain adhered under constant load applied parallel to the surface of the tape and stainless steel as test substrate.

### List of materials

2-EHA: 2-ethylhexyl acrylate, obtained from BASF AG.
AA: acrylic acid, obtained from BASF AG.
Irgacure 651, photoinitiator, commercially available from Ciba Specialty Chemicals Inc. of Hawthorne, NY.
ABP: 4-Acryloxybenzophenone, obtained from 3M Hilden, Germany.
Irganox 1076, antioxidant, commercially available from Ciba Specialty Chemicals Inc. of Hawthorne, NY.
IOTG, isooctyl thioglycolate, chain transfer agent, commercially available from Arkema.
Acrosil Liner DR 544 000 000, supplied by Laufenberg GmbH.
BYK P4200 degassing additive, supplied by Byk-Chemie GmbH.

### Process of making a precursor composition of a pressure sensitive adhesive comprising an acrylic-based polymeric composition

A copolymer of 2-EHA and AA is bulk polymerized under UV light sealed in ethylene vinyl acetate film pouches as described in U.S. Patent No. 6,294,249 (Hamer et al.). Two sheets of 2.5 mil (51 micrometer) thick ethylene vinyl acetate, commercially available as VA-24 from Pliant Corp. of Evansville, IN, are heat sealed on the lateral edges and the bottom to form a rectangular pouch on a liquid form, fill, and seal machine. The pouch is filled with a pre-adhesive composition having 92 parts 2-EHA, 8 parts AA, 0.20 phr of Irgacure 651, 0.10 phr ABP, 0.4 phr of Irganox 1076 and 0.04 phr of IOTG. The filled package is then heat sealed at the top in the cross direction through the monomer to form individual pouches measuring 13.4 cm by 4.3 cm by about 0.4 cm thick containing 25 grams of the pre-adhesive composition. The pouches are placed in a water bath that is maintained between about 16°C and 32°C and exposed to ultraviolet radiation (supplied by lamps having about 90 percent of the emissions between 300 and 400 nanometers (nm), and a peak emission at 351 nm) at an intensity comprised between 3.0 and 6.0 mW/cm2 for 20 minutes.

### Process of manufacturing a pressure sensitive adhesive

The acrylic-based polymeric pouch material produced as described above, is fed via a Linden feeder system to a 30 mm diameter co-rotating twin screw extruder, available as "ZSK-30" from Werner & Pfleiderer, Ramsey, NJ. The twin screw extruder is operated at 400 rpm and the extruder temperature is set ranging from 125°C up to 180°C. The extrusion performance is around 3-4 kg/h. The degassing additive is fed by a solid state dispenser KTron T20 with a 36 rpm. In the course consecutively a vacuum of 2-5mbar is applied. The hotmelt adhesive mixture is then coated with a rotary rod dye onto a release liner and crosslinked with UVC light (60% power, using a medium pressure mercury lamp, with a dose equal to 26-32 mJ/sqcm). The coating weight is approximately 50g/sqm.

### VOC reduction test results

**Table 1: VOC reduction test results according to VDA 278.**

| VDA 278 | VOC | FOG |
|---|---|---|
| No treatment | 1450 µg/g | 255 µg/g |
| Only vacuum | 865 µg/g | 175 µg/g |
| 2% degassing additive + vacuum | 620 µg/g | 130 µg/g |

### Adhesion test results

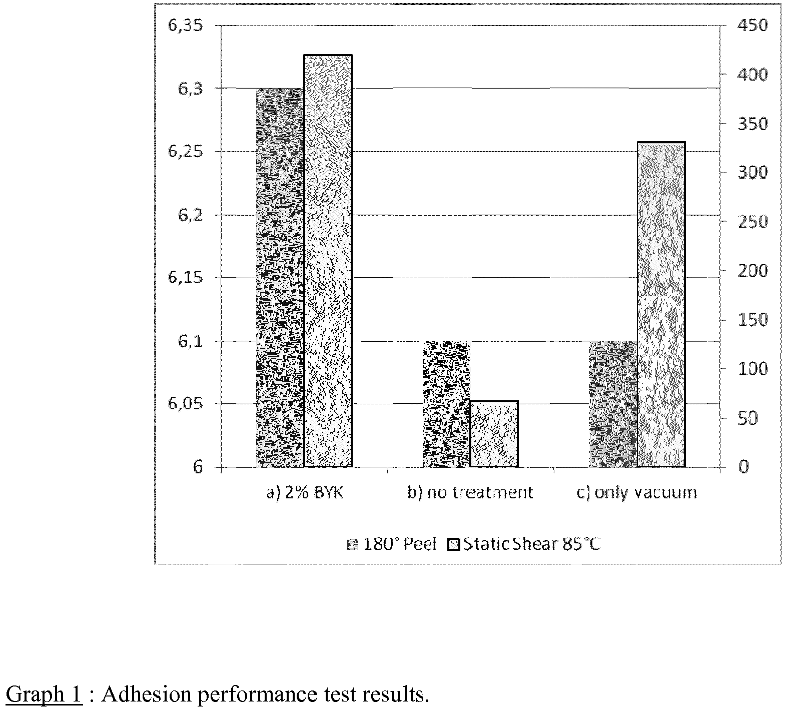

## Claims

1. A process of manufacturing a pressure sensitive adhesive, the process comprising the steps of:
a) providing a precursor composition of a pressure sensitive adhesive;
b) incorporating a degassing additive into the precursor composition of a pressure sensitive adhesive, wherein the degassing additive comprises a porous carrier and an aqueous medium, wherein the porous carrier comprises a polymeric material and wherein the aqueous medium is absorbed into the porous carrier and comprises a surfactant;
c) allowing the degassing additive to release the aqueous medium into the precursor composition of a pressure sensitive adhesive; and
d) extracting the water released from the degassing additive, from the precursor composition of a pressure sensitive adhesive.

2. A process according to claim 1, wherein water is extracted in gaseous form, preferably by using a degassing step, more preferably by using a vacuum-assisted degassing step.

3. A process according to any of the preceding claims, wherein the porous carrier comprises an hydrophobic polymer, preferably a polymeric material selected from the group consisting of polyolefins, polyesters, polystyrenes, polyamides, polycarbonates, polyvinyl chlorides, polyurethanes, polymethacrylate, fluoropolymers, polyacrylic acids, and any combinations or mixtures thereof.

4. A process according to any of the preceding claims, wherein the porous carrier comprises a polymeric material selected from the group of polyolefins, preferably from the group consisting of polypropylene, polyethylene, and any combinations or mixtures thereof.

5. A process according to any of the preceding claims, wherein the surfactant is selected from the group consisting of polyethylene glycols, polyglycol ethers, and any combinations of mixtures thereof.

6. A process according to any of the preceding claims, wherein the degassing additive is incorporated in the precursor composition of a pressure sensitive adhesive in dry form, preferably in a free-flowing particulate form.

7. A process according to any of the preceding claims, wherein the degassing additive comprises water in an amount comprised between 30 wt% and 70 wt%, between 40 wt% and 65 wt%, between 45 wt% and 60 wt%, or even between 45 wt% and 55 wt%, by weight of the degassing additive.

8. A process according to any of the preceding claims, which comprises a hotmelt processing step, preferably a continuous hotmelt mixing processing step, more preferably a hotmelt extrusion processing step, in particular a twin screw hotmelt extrusion processing step.

9. A process according to claim 8, wherein the degassing additive is incorporated into the precursor composition of a pressure sensitive adhesive during a continuous hotmelt mixing processing step, preferably during a hotmelt extrusion processing step, more preferably during a twin screw hotmelt extrusion processing step.

10. A process according to any of the preceding claims, wherein the amount of water incorporated by the degassing additive into the precursor composition of a pressure sensitive adhesive is comprised between 0.005 wt% and 5.0 wt%, between 0.25 wt% and 3.0 wt%, between 0.5 wt% and 2.5 wt%, or even between 0.8 wt% and 1.5 wt%, by weight of the precursor composition of a pressure sensitive adhesive.

11. A process according to any of the preceding claims, wherein the precursor composition of a pressure sensitive adhesive comprises the degassing additive in an amount comprised between 0.01 wt% and 10 wt%, between 0.5 wt% and 5 wt%, between 1.0 wt% and 3.0 wt%, or even between 1.5 wt% and 2.5 wt%, by weight of the precursor composition of a pressure sensitive adhesive.

12. A process according to any of the preceding claims, wherein the precursor composition of a pressure sensitive adhesive comprises a (meth)acrylate-based polymeric material.

13. A precursor composition of a pressure sensitive adhesive comprising a degassing additive, wherein the degassing additive comprises a porous carrier and an aqueous medium, wherein the porous carrier comprises a polymeric material and wherein the aqueous medium is absorbed into the porous carrier and comprises a surfactant.

14. Use of a degassing additive comprising a porous carrier and an aqueous medium, wherein the porous carrier comprises a polymeric material and wherein the aqueous medium is absorbed into the porous carrier and comprises a surfactant, for reducing volatile organic compounds in a pressure sensitive adhesive.

## Patentansprüche

1. Verfahren zum Herstellen eines Haftklebers, wobei das Verfahren die folgenden Schritte umfasst:
a) Bereitstellen einer Vorläuferzusammensetzung eines Haftklebers;
b) Einarbeiten eines Entgasungszusatzsstoffs in die Vorläuferzusammensetzung eines Haftklebers, wobei der Entgasungszusatzstoff einen porösen Träger und ein wässriges Medium umfasst, wobei der poröse Träger ein Polymermaterial umfasst und wobei das wässrige Medium in den porösen Träger absorbiert wird und ein Tensid umfasst;
c) Ermöglichen, dass der Entgasungszusatzstoff das wässrige Medium in die Vorläuferzusammensetzung eines Haftklebers freisetzt; und
d) Extrahieren des aus dem Entgasungszusatzstoff freigesetzten Wassers aus der Vorläuferzusammensetzung eines Haftklebers.

2. Verfahren nach Anspruch 1, wobei Wasser in gasförmiger Form extrahiert wird, vorzugsweise unter Verwendung eines Entgasungsschritts, besonders bevorzugt unter Verwendung eines vakuumunterstützten Entgasungsschritts.

3. Verfahren nach einem der vorstehenden Ansprüche, wobei der poröse Träger ein hydrophobes Polymer, vorzugsweise ein Polymermaterial ausgewählt aus der Gruppe bestehend aus Polyolefinen, Polyestern, Polystyrolen, Polyamiden, Polycarbonaten, Polyvinylchloriden, Polyurethanen, Polymethacrylaten, Fluorpolymeren, Polyacrylsäuren und beliebigen Kombinationen oder Mischungen davon, umfasst.

4. Verfahren nach einem der vorstehenden Ansprüche, wobei der poröse Träger ein Polymermaterial, ausgewählt aus der Gruppe der Polyolefine, vorzugsweise aus der Gruppe bestehend aus Polypropylen, Polyethylen und beliebigen Kombinationen oder Mischungen davon, umfasst.

5. Verfahren nach einem der vorstehenden Ansprüche, wobei das Tensid ausgewählt wird aus der Gruppe bestehend aus Polyethylenglykolen, Polyglykolethern und beliebigen Kombinationen von Mischungen davon.

6. Verfahren nach einem der vorstehenden Ansprüche, wobei der Entgasungszusatzstoff in die Vorläuferzusammensetzung eines Haftklebers in trockener Form, vorzugsweise in einer rieselfähigen Teilchenform, eingearbeitet wird.

7. Verfahren nach einem der vorstehenden Ansprüche, wobei der Entgasungszusatzstoff Wasser in einer Menge umfasst, die zwischen 30 Gew.-% und 70 Gew.-%, zwischen 40 Gew.-% und 65 Gew.-%, zwischen 45 Gew.-% und 60 Gew.-% oder sogar zwischen 45 Gew.-% und 55 Gew.-%, bezogen auf das Gewicht des Entgasungszusatzstoffs, liegt.

8. Verfahren nach einem der vorstehenden Ansprüche, das einen Schmelzverarbeitungsschritt, vorzugsweise einen kontinuierlichen Schmelzmischverarbeitungsschritt, weiter bevorzugt einen Schmelzextrusionsverarbeitungsschritt, insbesondere einen Doppelschnecken-Schmelzextrusionsverarbeitungsschritt, umfasst.

9. Verfahren nach Anspruch 8, wobei der Entgasungszusatzstoff während eines kontinuierlichen Schmelzmischverarbeitungsschritts, vorzugsweise während eines Schmelzextrusionsverarbeitungsschritts, weiter bevorzugt während eines Doppelschnecken-Schmelzextrusionsverarbeitungsschritts in die Vorläuferzusammensetzung eines Haftklebers eingearbeitet wird.

10. Verfahren nach einem der vorstehenden Ansprüche, wobei die Menge an Wasser, die durch den Entgasungszusatzstoff in die Vorläuferzusammensetzung eines Haftklebers eingearbeitet wird, zwischen 0,005 Gew.-% und 5,0 Gew.- %, zwischen 0,25 Gew.-% und 3,0 Gew.-%, zwischen 0,5 Gew.-% und 2,5 Gew.-%, oder sogar zwischen 0,8 Gew.-% und 1,5 Gew.-%, bezogen auf das Gewicht der Vorläuferzusammensetzung eines Haftklebers, liegt.

11. Verfahren nach einem der vorstehenden Ansprüche, wobei die Vorläuferzusammensetzung eines Haftklebers den Entgasungszusatzstoff in einer Menge umfasst, die 0,01 Gew.-% und 10 Gew.-%, zwischen 0,5 Gew.-% und 5 Gew.-%, zwischen 1,0 Gew.-% und 3,0 Gew.-%, oder sogar zwischen 1,5 Gew.-% und 2,5 Gew.-%, bezogen auf das Gewicht der Vorläuferzusammensetzung eines Haftklebers, liegt.

12. Verfahren nach einem der vorstehenden Ansprüche, wobei die Vorläuferzusammensetzung eines Haftklebers ein Polymermaterial auf (Meth)acrylatbasis umfasst.

13. Vorläuferzusammensetzung eines Haftklebers, umfassend einen Entgasungszusatzstoff, wobei der Entgasungszusatzstoff einen porösen Träger und ein wässriges Medium umfasst, wobei der poröse Träger ein Polymermaterial umfasst und wobei das wässrige Medium in den porösen Träger absorbiert wird und ein Tensid umfasst.

14. Verwendung eines Entgasungszusatzstoffs, der einen porösen Träger und ein wässriges Medium umfasst, wobei der poröse Träger ein Polymermaterial umfasst und wobei das wässrige Medium in den porösen Träger absorbiert wird und ein Tensid umfasst, zum Reduzieren von flüchtigen organischen Verbindungen in einem Haftkleber.

## Revendications

1. Procédé de fabrication d'un adhésif sensible à la pression, le procédé comprenant les étapes consistant à :
a) fournir une composition précurseur d'adhésif sensible à la pression ;
b) incorporer un additif de dégazage dans la composition précurseur d'adhésif sensible à la pression, l'additif de dégazage comprenant un support poreux et un milieu aqueux, le support poreux comprenant un matériau polymère et le milieu aqueux étant absorbé dans le support poreux et comprenant un agent tensioactif ;
c) laisser l'additif de dégazage libérer le milieu aqueux dans la composition précurseur d'adhésif sensible à la pression ; et
d) extraire l'eau libérée par l'additif de dégazage, depuis la composition précurseur d'adhésif sensible à la pression.

2. Procédé selon la revendication 1, dans lequel l'eau est extraite sous forme gazeuse, de préférence en utilisant une étape de dégazage, plus préférablement en utilisant une étape de dégazage assisté par vide.

3. Procédé selon l'une quelconque des revendications précédentes, dans lequel le support poreux comprend un polymère hydrophobe, de préférence un matériau polymère choisi dans le groupe constitué de polyoléfines, polyesters, polystyrènes, polyamides, polycarbonates, chlorures de polyvinyle, polyuréthanes, polyméthacrylate, fluoropolymères, acides polyacryliques et toutes combinaisons ou tous mélanges de ceux-ci.

4. Procédé selon l'une quelconque des revendications précédentes, dans lequel le support poreux comprend un matériau polymère choisi dans le groupe des polyoléfines, de préférence dans le groupe constitué par le polypropylène, le polyéthylène et toutes combinaisons ou tous mélanges de ceux-ci.

5. Procédé selon l'une quelconque des revendications précédentes, dans lequel l'agent tensioactif est choisi dans le groupe constitué de polyéthylène glycols, éthers de polyglycol et toutes combinaisons ou mélanges de ceux-ci.

6. Procédé selon l'une quelconque des revendications précédentes, dans lequel l'additif de dégazage est incorporé dans la composition précurseur d'adhésif sensible à la pression sous forme sèche, de préférence sous une forme particulaire s'écoulant librement.

7. Procédé selon l'une quelconque des revendications précédentes, dans lequel l'additif de dégazage comprend de l'eau en une quantité comprise entre 30 % en poids et 70 % en poids, entre 40 % en poids et 65 % en poids, entre 45 % en poids et 60 % en poids, voire entre 45 % en poids et 55 % en poids, par rapport au poids de l'additif de dégazage.

8. Procédé selon l'une quelconque des revendications précédentes, qui comprend une étape de traitement à chaud, de préférence une étape de traitement de mélange continu à chaud, plus préférablement une étape de traitement d'extrusion à chaud, en particulier une étape de traitement d'extrusion à chaud dans une double vis.

9. Procédé selon la revendication 8, dans lequel l'additif de dégazage est incorporé dans la composition précurseur d'adhésif sensible à la pression pendant une étape de traitement de mélange continu à chaud, de préférence pendant une étape de traitement d'extrusion à chaud, plus préférablement pendant une étape de traitement d'extrusion à chaud dans une double vis.

10. Procédé selon l'une quelconque des revendications précédentes, dans lequel la quantité d'eau incorporée par l'additif de dégazage dans la composition précurseur d'adhésif sensible à la pression est comprise entre 0,005 % en poids et 5,0 % en poids, entre 0,25 % en poids et 3,0 % en poids, entre 0,5 % en poids et 2,5 % en poids, voire entre 0,8 % en poids et 1,5 % en poids, par rapport au poids de la composition précurseur d'adhésif sensible à la pression.

11. Procédé selon l'une quelconque des revendications précédentes, dans lequel la composition précurseur d'adhésif sensible à la pression comprend l'additif de dégazage en une quantité comprise entre 0,01 % en poids et 10 % en poids, entre 0,5 % en poids et 5 % en poids, entre 1,0 % en poids et 3,0 % en poids, voire entre 1,5 % en poids et 2,5 % en poids, par rapport au poids de la composition précurseur d'adhésif sensible à la pression.

12. Procédé selon l'une quelconque des revendications précédentes, dans lequel la composition précurseur d'adhésif sensible à la pression comprend un matériau polymère à base de (méth)acrylate.

13. Composition précurseur d'adhésif sensible à la pression comprenant un additif de dégazage, l'additif de dégazage comprenant un support poreux et un milieu aqueux, le support poreux comprenant un matériau polymère et le milieu aqueux étant absorbé dans le support poreux et comprenant un agent tensioactif.

14. Utilisation d'un additif de dégazage comprenant un support poreux et un milieu aqueux, le support poreux comprenant un matériau polymère et le milieu aqueux étant absorbé dans le support poreux et comprenant un agent tensioactif, pour réduire les composés organiques volatils dans un adhésif sensible à la pression.
